# EUROPÄISCHE PATENTSCHRIFT

(11) **EP 2 569 076 B1**
(45) Veröffentlichungstag und Bekanntmachung des Hinweises auf die Patenterteilung: **30.03.2016**
(21) Anmeldenummer: 10788002.3
(22) Anmeldetag: 16.11.2010
(51) Int. Cl.: B01D 53/00, B01D 53/34, B01D 53/56, B01D 53/72, F23G 7/06, F27D 17/00, C04B 7/43, C04B 7/36

(54) **VERFAHREN ZUR REINIGUNG VON ABGASEN MITTELS REGENERATIVER THERMISCHER NACHVERBRENNUNG**
PROCESS FOR CLEANING OFFGASES BY MEANS OF REGENERATIVE THERMAL POSTCOMBUSTION
PROCÉDÉ D'ÉPURATION DE GAZ RÉSIDUAIRES PAR POSTCOMBUSTION THERMIQUE RÉGÉNÉRATIVE

(30) Priorität: 26.11.2009 DE 102009055942
(43) Veröffentlichungstag der Anmeldung: 20.03.2013
(73) Patentinhaber: Chemisch Thermische Prozesstechnik GmbH, 8042 Graz (AT)
(72) Erfinder: SCHEDLER, Johannes, A-8410 Wildon (AT); THALHAMMER, Heimo, A-8020 Graz (AT); PHILIPP, Gerhard, A-2630 Pottschach (AT)
(74) Vertreter: LS-MP von Puttkamer Berngruber Loth Spuhler
(86) Internationale Anmeldenummer: PCT/EP2010/006977
(87) Internationale Veröffentlichungsnummer: WO 2011/063905

(56) Entgegenhaltungen:
- EP-A1- 1 842 836
- WO-A1-90/12248
- WO-A1-2005/108891
- DE-A1- 4 432 316
- DE-C1- 10 214 567
- GB-A- 2 044 900
- US-A- 3 870 474
- US-A- 5 026 277

## Beschreibung

Die Erfindung bezieht sich auf ein Verfahren nach dem Oberbegriff des Anspruchs 1. Sie hat auch eine Vorrichtung zur Durchführung des Verfahrens zum Gegenstand.

Aus US-A-5,589,142 ist ein Verfahren nach dem Oberbegriff des Anspruchs 1 bekannt. Dabei sind die Wärmespeicherkörper der Regeneratoren am oberen Ende mit einer Katalysatorschicht zur Verbrennung flüchtiger organischer Verbindungen versehen. Die Brennkammer mit dem Brenner wird durch zwei Katalysatorschichten zur selektiven katalytischen Reduktion der Stickoxide begrenzt, wobei die Stickstoffwasserstoffverbindung dem Abgas stromaufwärts der Katalysatorschicht auf den Wärmespeicherkörpern des jeweiligen Regenerators und stromabwärts der diesem Regenerator zugewandten Katalysatorschicht der Brennkammer zugeführt wird.

Nach DE 44 32 316 Al wird das zu reinigende Abgas, das Kohlenstoffverbindungen und Stickoxide enthält, in von dem Brennraum getrennten Freiräumen, in dem Regenerator, in den es in die regenerative Nachverbrennungsanlage eintritt und aus dem es austritt, bei einer Temperatur von 420°C oder weniger, durch einen DeNOx-Katalysator geleitet, auf den eine Eindüsungsvorrichtung für Ammoniak zur katalytischen Stickstoffoxid-Reduktion gerichtet ist.

Bei der Zementherstellung aber auch bei anderen industriellen Prozessen, bei denen zur Erzeugung hoher Temperaturen Brennstoffe verfeuert werden, spielen Umweltschutzaspekte sowie die Rohstoff- und Brennstoffkosten eine immer größere Rolle. So soll insbesondere der Ausstoß von Stickoxiden (NOₓ), aber auch von Kohlenmonoxid (CO) reduziert werden, während die Brennstoffkosten durch Verringerung der Brennstoffmenge sowie kostengünstige Brennstoffe, sogenannte Sekundärbrennstoffe herabgesetzt werden sollen. Auch Sekundärrohstoffe wie z.B. Flugasche enthalten organische Komponenten und fördern damit die Emission von Kohlenmonoxid.

Zwar ist es bekannt, bei der Zementklinkerherstellung eine SNCR (Selective Non Catalytic Reduction)-Anlage zum Abbau der Stickoxide im Abgas zu verwenden. Jedoch kann damit nur ein Teil des NOₓ abgebaut werden, zumal bei einer zu hohen Dosierung des als Reduktionsmittel verwendeten Ammoniaks (NH₃) die Gefahr besteht, dass ein Ammoniak-Schlupf auftritt und damit schädliches Ammoniak ins Freie gelangt.

Aufgabe der Erfindung ist es, eine Abgasreinigung insbesondere für die Zementindustrie zur Verfügung zu stellen, mit der unter Herabsetzung der Brennstoffkosten der Ausstoß von Schadstoffen reduziert wird.

Dies wird erfindungsgemäß mit dem im Anspruch 1 gekennzeichneten Verfahren erreicht, in den Ansprüchen 2 bis 19 sind bevorzugte Ausführungsformen des erfindungsgemäßen Verfahrens wiedergegeben.

Nach der Erfindung wird das Abgas von Stickoxiden (NOₓ) und brennbaren Kohlenstoffverbindungen gereinigt. Die Kohlenstoffverbindung kann dabei beispielsweise Kohlenmonoxid oder eine organische Kohlenstoffverbindung sein.

Das Abgas wird dabei mindestens zwei mit warmespeicherkörpern gefüllten und durch eine Brennkammer verbundenen Regeneratoren zugeführt. Als Wärmespeicherkörper werden vorzugsweise keramische, prismenförmige Wärmespeicherkörper mit einer Vielzahl von zur Prismenhauptachse parallelen Kanälen verwendet, wie in EP-B2-0472605 beschrieben ist.

Das Abgas wird in Zyklen wechselweise wenigstens einem Regenerator zugeführt, dessen Wärmespeicherkörper zuvor erwärmt worden sind. Das so vorerwärmte Abgas wird der Brennkammer zugeführt, die die hohe Temperatur von mehr als 850°C, insbesondere 850 bis 1000°C aufweist. Bei dieser hohen Temperatur werden die Kohlenstoffverbindungen in der Brennkammer durch den Luftsauerstoff in dem Abgas verbrannt, während die Stickoxide mit einer Stickstoffwasserstoffverbindung in der Brennkammer bei dieser hohen Temperatur reduziert werden.

Das gebildete Reingas wird dann durch wenigstens einen weiteren Regenerator unter Erwärmung von dessen Wärmespeicherkörpern abgezogen, wobei dabei das Abgases wieder abgekühlt wird.

Vorzugsweise ist wenigstens ein weiterer Regenerator vorgesehen, der während des Zyklus mit Reingas gespült wird. Anstelle von zwei oder drei Regeneratoren kann beispielsweise auch ein Vielfaches an Regeneratoren vorgesehen sein.

Erfindungsgemäß erfolgt damit die Oxidation der Kohlenstoffverbindungen und die Reduktion der Stickoxide im Abgas ausschließlich thermisch, also ohne Verwendung eines Katalysators. D.h. erfindungsgemäß wird eine regenerative thermische Nachverbrennungsanlage verwendet, mit der zugleich NOₓ zu Stickstoff (N₂) reduziert wird. Damit können erfindungsgemäß auch Stickoxide und Kohlenstoffverbindungen enthaltende Abgase gereinigt werden, die Katalysatorgifte, also beispielsweise Schwermetalle oder Staub enthalten, wie sie beispielsweise bei der Zementklinkerherstellung anfallen können.

Während das Kohlenmonoxid in der Brennkammer großteils zu Kohlendioxid oxidiert wird, wird ein kleinerer Teil der Stickoxide erfindungsgemäß bereits durch das Kohlenmonoxid zu Stickstoff reduziert. Weiters wird durch die Reduktion der Stickoxide mit der Stickstoffwasserstoffverbindung Stickstoff gebildet. Als Stickstoffwasserstoffverbindung wird vorzugsweise Ammoniak, Harnstoff oder Carbaminsäure verwendet.

Die Stickstoffwasserstoffverbindung wird vorzugsweise als wässrige Lösung dem Brennraum zugeführt. Die Lösung kann dabei Additive zur Senkung der erforderlichen Reaktionstemperatur, beispielsweise organische Verbindungen, wie Alkohole, enthalten. Zur optimalen Verteilung der wässrigen Lösung der Stickstoffwasserstoffverbindung in der Brennkammer können Zweistoffdüsen, also eine Düse mit einer mittleren Öffnung für die wässrige Lösung und einer dazu konzentrischen Öffnung für das Druckgas, oder Ultraschallzerstäuber mit jeweils konstantem oder vorzugsweise pulsierendem Pumpendruck verwendet werden.

Die Brennkammer weist drei Zonen auf, nämlich eine erste Zone über den Wärmespeicherkörpern des Regenerators, in dem die im Abgas enthaltenen Komponenten CO, NOx und Stickstoffwasserstoffverbindung (NH₃) vorreagieren, eine zweite Zone zwischen den beiden Regeneratoren und eine dritte Zone über den Wärmespeicherkörpern des Regenerators, über den das Reingas abgezogen wird. Dabei wird die Stickstoffwasserstoffverbindung als wässrige Lösung am Beginn und am Ende der zweiten Zone zugeführt.

Die Stickstoffwasserstoffverbindung wird über Eindüslanzen, die über den Querschnitt der Brennkammer verteilt sind, in die jeweilige Zone der Brennkammer eingebracht.

Wenn das Abgas bereits einen Teil der Stickstoffwasserstoffverbindung enthält, wird in der ersten Zone ein Teil der Stickoxide reduziert. Demgegenüber werden mit der am Beginn der zweiten Zone zugeführten Stickstoffwasserstoffverbindung die Stickoxide in der zweiten Zone reduziert.

Zur Erhöhung des Wirkungsgrades der Reduktion der Stickoxide wird die wässrige Lösung der Stickstoffwasserstoffverbindung sowohl am Beginn der zweiten Zone als auch am Ende der zweiten Zone zugeführt, wobei die Menge der Stickstoffwasserstoffverbindung die am Beginn der zweiten Zone zugeführt wird, größer ist als die Menge der Stickstoffwasserstoffverbindung, die am Ende der zweiten Zone zugeführt wird. Dabei können die Mengen der Stickstoffwasserstoffverbindung, die am Beginn und am Ende der zweiten Zone zugeführt werden, unabhängig voneinander geregelt werden.

Die Verweilzeit des Abgases in der ersten Zone und der dritten Zone der Brennkammer beträgt vorzugsweise jeweils 0,3 bis 1 Sekunde, insbesondere 0,4 bis 0,6 Sekunden, die Verweilzeit des Abgases in der zweiten Zone der Brennkammer vorzugsweise 0,5 bis 2 Sekunden, insbesondere 0,8 bis 1,5 Sekunden. Ein Zyklus dauert vorzugsweise 1 bis 4, insbesondere 2 bis 3 Minuten.

Das erfindungsgemäße Verfahren ist insbesondere für Stickoxide enthaltende Abgase mit einem hohen Gehalt an organischen und/oder anorganischen Kohlenstoffverbindungen, beispielsweise einem Kohlenmonoxidgehalt von mehr als 0,1 Vol.%, insbesondere mehr als 0,4 Vol.% geeignet. Durch die Verbrennungsenthalpie der Kohlenstoffverbindungen kann ein autothermer Betrieb der Nachverbrennungsanlage sichergestellt werden. Das heißt, zum Betrieb der Nachverbrennungsanlage ist kein weiterer Zusatzbrennstoff erforderlich. Der gegebenenfalls vorgesehene Brenner im Brennraum dient damit lediglich zum Anfahren der Nachverbrennungsanlage.

Die erfindungsgemäße Abgasreinigung kann damit bei industriellen Prozessen zum Einsatz kommen, bei denen Brennstoffe und/oder Rohstoffe verwendet werden, die auf Grund der Geruchs- und CO-Bildung bisher nicht einsetzbar waren.

Die erfindungsgemäße Abgasreinigung ist daher insbesondere für Abgase von industriellen Prozessen geeignet, bei denen aufgrund einer hohen Prozesstemperatur in Gegenwart von Luft Stickoxide gebildet werden und zudem Kohlenstoffverbindungen, wie Kohlenmonoxid und organische Verbindungen anfallen. Dies ist z.B. auch beim Brennen von Kalk der Fall, ferner z. B. in der Stahlindustrie.

Dazu zählt aber vor allem das Abgas, das bei der Zementklinkerherstellung entsteht.

Dabei werden die Rohmaterialien, wie Kalkstein, Quarzsand und Ton, zusammen vermahlen und gleichzeitig getrocknet. Das dabei entstehende Rohmehl wird dann in einem Drehrohrofen bei einer Temperatur von etwa 1450°C zu Klinker gebrannt, welcher in einem Kühler durch die Zuluft des Ofens heruntergekühlt wird. Durch die hohe Temperatur im Drehrohrofen weist das aus dem Drehrohrofen austretende Abgas eine hohe NOₓ-Konzentration von mehr als 1000 mg/m³ auf.

Zum Betrieb des Drehrohrofens ist eine Primärfeuerung vorgesehen, mit der der Brennstoff und die Verbrennungsluft, nämlich die Primärluft und die im Gegenstrom im Kühler vorerwärmte Sekundärluft, zugeführt wird.

Als Brennstoffe werden üblicherweise Schweröl, Steinkohle oder Petrolkoks verwendet. Da erfindungsgemäß ein hoher Anteil an Kohlenstoffverbindungen, insbesondere Kohlenmonoxid, in dem bei der Zementklinkerherstellung anfallenden Abgas angestrebt wird, um die thermische Nachverbrennungsanlage autotherm zu betreiben und zudem in der thermischen Nachverbrennungsanlage durch die hohe Temperatur der Brennkammer eine sehr weitgehende Reinigung des Abgases von weiteren Schadstoffen erfolgt, können erfindungsgemäß die relativ kostspieligen Brennstoffe zum größeren Teil durch kostengünstige Abfallprodukte ersetzt werden, wie Altreifen, Altöle, Kunststoffabfälle oder biogene Brennstoffe, wie Sonnenblumenkernschalen, Papierfaserreststoffe oder Tiermehl.

Zudem können erfindungsgemäß statt der üblichen Rohmaterialien, wie Kalkstein, Quarzsand und Ton, für die Rohmehlherstellung auch Abfallprodukte, insbesondere kohlenstoffhaltige Abfallprodukte, wie Flugasche, verwendet werden, aber auch z.B. Ziegelsplitt aus Bauschutt.

Vorzugsweise wird das Rohmehl vor dem Brennen im Drehrohrofen in einem Kalzinator mit einer Sekundärfeuerung kalziniert. Für die Sekundärfeuerung kann eine Tertiärluft verwendet werden, die im Gegenstrom durch den Kühler vorerwärmt sein kann.

Als Brennstoff für die Sekundärfeuerung werden vorzugsweise teilweise oder ausschließlich die erwähnten Abfallprodukte verwendet.

Bei der Kalzinierung im Kalzinator wird insbesondere Kohlendioxid aus dem Rohmehl ausgetrieben. Dazu wird etwa die Hälfte der für die Zementklinkerherstellung insgesamt erforderlichen Energie verbraucht. Durch die Verwendung von Abfallprodukten als Brennstoff für die Sekundärfeuerung wird somit eine erhebliche Kosteneinsparung erzielt.

Zudem wird das beim Kalzinieren freigesetzte Kohlendioxid bei hoher Temperatur zum Teil zu Kohlenmonoxid zersetzt, wodurch sich der Kohlenmonoxidgehalt in der Abluft weiter erhöht.

Vorzugsweise wird das aus dem Drehrohrofen oder, falls ein Kalzinator vorgesehen ist, aus dem Kalzinator austretende Abgas zum Abbau von NOₓ durch Zufuhr einer Stickstoffwasserstoffverbindung bei einer Temperatur von 800 bis 1000°C, insbesondere 850 bis 900°C in einer SNCR-Anlage einer selektiven nicht-katalytischen Reduktion unterworfen. Dadurch kann ein erheblicher Anteil des NOₓ im Abgas mit dieser SNCR-Anlage abgebaut werden.

Da erfindungsgemäß das Abgas noch einer thermischen Nachverbrennung unterworfen wird, kann bei dieser selektiven nicht-katalytischen Reduktion die Stickstoffwasserstoffverbindung in einem überstöchiometrischen Verhältnis (Überschuss) zugeführt werden, da dann die überschüssige Stickstoffverbindung in der nachfolgenden regenerativen thermischen Nachverbrennungsanlage aufgebraucht wird.

Vorzugsweise wird das Abgas nach der selektiven nicht-katalytischen Reduktion der Stickoxide einem Wärmetauscher, beispielsweise einem Zyklon-Wärmetauscher, zur Vorerwärmung des Rohmehls zugeführt. Das aus dem Wärmetauscher austretende Abgas wird danach vorzugsweise zumindest teilweise zur Mahltrocknung der Rohstoffe verwendet, aus denen das Rohmehl hergestellt wird, und dann über einen Staubfilter der regenerativen thermischen Nachverbrennungsanlage zugeführt. Der Gehalt des Kohlenmonoxids, in dem der regenerativen thermischen Nachverbrennungsanlage zugeführten Abgas, kann dabei 500 bis 10000 vorzugsweise 1000-5000 mg/Nm³ betragen, der NOₓ-Gehalt 100 bis 1000, vorzugsweise 200-500 mg/Nm³.

Nachstehend ist die Erfindung anhand der beigefügten Zeichnung beispielhaft näher erläutert. Darin zeigen jeweils schematisch:
Figur 1 eine Anlage zur Zementklinkerherstellung mit einer Abgasreinigungsanlage; und
Figur 2 und 3 im Querschnitt eine Ausführungsform der Abgasreinigungsanlage mit zwei Regeneratoren, wobei das zu reinigende Abgas dem einen bzw. anderen Regenerator zugeführt wird.

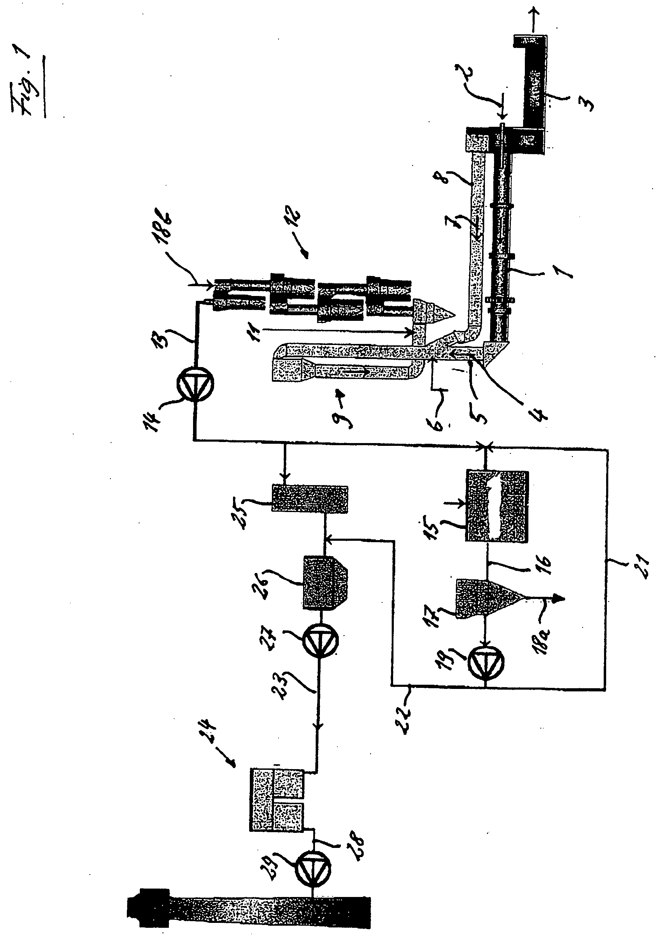

Gemäß Figur 1 ist zur Zementklinkerherstellung ein Drehrohrofen 1 mit einer durch den Pfeil 2 dargestellten Primärfeuerung vorgesehen, mit welcher der Brennstoff und die Verbrennungsluft zugeführt werden. Die im Kühler 3 erwärmte Sekundärluft wird direkt dem Drehrohrofen 1 zugeführt.

Das durch den Pfeil 4 dargestellte Abgas des Drehrohrofens 1 wird über eine Leitung 5 der durch den Pfeil 6 dargestellten Sekundärfeuerung zugeführt, die mit Abfallprodukten, wie Altreifen und dergleichen, als Brennstoff befeuert wird, sowie mit im Kühler 3 vorerwärmter Tertiärluft gemäß dem Pfeil 7, die über die Leitung 8 zugeführt wird.

An die Sekundärfeuerung 6 schließt sich ein Kalzinator 9 an, an dessen Ende eine SNCR-Einrichtung 11 zur selektiven nicht katalytischen Reduktion von NOₓ in dem Abgas mit einer Stickstoffwasserstoffverbindung, wie Ammoniak, vorgesehen ist.

Von der SNCR-Einrichtung 11 strömt das Abgas durch den Zyklon-Wärmetauscher 12, um dann über eine Leitung 13 mit einem Gebläse 14 einer Einrichtung 15 zur Mahltrocknung der Rohstoffe zugeführt zu werden, aus denen das Rohmehl hergestellt wird.

Das gebildete Rohmehl wird über die Leitung 16 einem Zyklon 17 zugeführt und von dort gemäß den Pfeilen 18a und 18b dem Wärmetauscher 12. Vor Aufgabe des Rohmehls über 18b kann dieses noch homogenisiert und zwischengepuffert werden. Das aus dem Zyklon 17 austretende Abgas wird mit dem Gebläse 19 teils im Kreislauf über die Leitung 21 der Einrichtung 15 zur Mahltrocknung wieder zugeführt, teils über die Leitung 22 der Abgasleitung 23, die zu der regenerativen thermischen Nachverbrennungsanlage 24 führt. Das nicht zur Mahltrocknung verwendete Abgas wird der Abgasleitung 23 über eine Kühleinrichtung 25 zugeführt.

Das Abgas wird in der Abgasleitung 23 mit einem z. B. als Gewebefilter ausgebildeten Filter 26 entstaubt, dem das Gebläse 27 nachgeschaltet ist. Der anfallende Staub wird ebenfalls als Rohmehl dem Wärmetauscherturm 12 über 18 b aufgegeben. Das Abgas in der Abgasleitung 23 weist einen Kohlenmonoxid-Gehalt von z.B. 0,2 bis 1 Vol.-%, einen Stickoxid-Gehalt von z.B. 100 bis 1000 mg/Nm³ und einen Sauerstoff-Gehalt von z.B. 8 bis 13 Vol.-% auf, wobei der Rest im Wesentlichen Stickstoff, Wasser und Kohlendioxid ist.

Von der regenerativen thermischen Nachverbrennungsanlage 24 gelangt das Reingas über die Reingasleitung 28 mit dem Gebläse 29 ins Freie.

Das dem Wärmetauscher 12 gemäß dem Pfeil 18b zugeführte Rohmehl wird im Gegenstrom zum Abgas nach dem Wärmetauscher 12 dem Kalzinator 9 und dann zum Brennen dem Drehrohrofen 1 zugeführt, um anschließend in dem Kühler 3 heruntergekühlt zu werden.

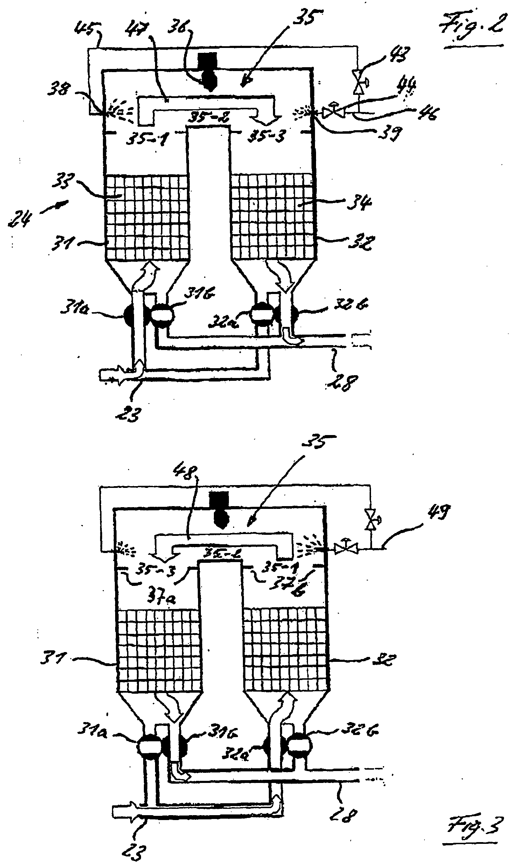

Gemäß Figur 2 und 3 weist die regenerative thermische Nachverbrennungsanlage 24 zwei Regeneratoren 31, 32 auf, deren unteres Ende jeweils mittels Absperrorganen 31a, 31b; 32a, 32b mit der Abgasleitung 23 mit dem zu reinigenden Abgas und der Reingasleitung 28 verbindbar ist.

Die Regeneratoren 31, 32 sind mit Wärmespeicherkörpern 33, 34 gefüllt und über eine Brennkammer 35, die mit einem Brenner 36 versehen sein kann, verbunden.

Die Brennkammer 35 besteht aus drei Zonen, und zwar einer ersten Zone 35-1 über den Wärmespeicherkörpern 33 des Regenerators 31, einer zweiten Zone 35-2 zwischen den beiden Regeneratoren 31, 32 und einer dritten Zone 35-3 über den Wärmespeicherkörpern 34 des zweiten Regenerators 32. Dabei ist in der ersten Zone 35-1 und der dritten Zone 35-3 oberhalb der Wärmespeicherkörper 33, 34 eine Einschnürung 37a, 37b zur Verwirbelung des Abgasstroms vorgesehen.

Oberhalb der Einschnürung 37a, 37b ist die zweite Zone 35-2 der Brennkammer 35 am Beginn und am Ende mit Düsen 38, 39 zur Zufuhr einer wässrigen Ammoniak-Lösung 49 oder einer anderen Stickstoffwasserstoffverbindung versehen, welche über die mit Absperrorganen 43, 44 versehenen Leitungen 45, 46 zugeführt wird.

Das Abgas aus der Abgasleitung 23 wird den Regeneratoren 31, 32 wechselweise zugeführt, wobei in Figur 2 das zu reinigende Abgas dem zuvor erwärmten Regenerator 31 zugeführt und das Reingas über den Regenerator 32 abgezogen wird, sodass in der Brennkammer 35 ein Abgasstrom gemäß dem Pfeil 47 entsteht.

Dazu ist an dem Regenerator 31 das Absperrorgan 31a geöffnet und das Absperrorgan 31b geschlossen, während das Absperrorgan 32a des Regenerators 32 geschlossen und das Absperrorgan 32b geöffnet ist.

Falls den vorerwärmten Wärmespeicherkörpern 33 des Regenerators 31 ein Abgas zugeführt wird, das eine Stickstoffwasserstoffverbindung und/oder Kohlenmonoxid enthält, wird ein Teil der Stickoxide in dem Abgas in der ersten Zone 35-1 reduziert.

Die am Beginn der zweiten Zone 35-2 über die Düse 38 zugeführte Stickstoffwasserstoffverbindung führt in der zweiten Zone 35-2 zu einer thermischen Reduktion der Stickoxide. Durch Eindüsen der Stickstoffwasserstoffverbindung über die Düse 39 am Ende der zweiten Zone 35-2 werden weitere Anteile von Stickoxiden in der dritten Zone 35-3 reduziert. Mit den Absperrorganen 43, 44 kann die Menge der über die Düsen 38, 39 jeweils zugeführten Stickstoffwasserstoffverbindung geregelt werden.

Durch die Verbrennung des Kohlenmonoxids und anderer Kohlenstoffverbindungen in dem zu reinigenden Abgas in dem Brennraum 35 wird die Temperatur des Abgases im Brennraum zwischen 850 und 950°C gehalten.

Wenn die Wärmespeicherkörper 34 in dem Regenerator 32 durch das heiße Reingas aufgeheizt worden sind, wird der Regenerator 32 durch Öffnen des Absperrorgans 32a und Schließen des Absperrorgans 32b mit der Abgasleitung 23 verbunden, und der Regenerator 31 durch Schließen des Absperrorgans 31a und Öffnen des Absperrorgans 31b mit der Reingasleitung 28.

Damit wird die Strömungsrichtung des Abgases umgekehrt, wie durch den Pfeil 48 in Figur 3 dargestellt.

Das nachstehende Beispiel, das mit einer Anlage zur Zementklinkerherstellung gemäß Figur 1 und einer Abgasreinigungsanlage gemäß Figur 2 und 3 durchgeführt worden ist, dient der weiteren Erläuterung der Erfindung.

### Beispiel

Ein Drehrohrofen 1 zur Klinkererzeugung wird mit Primärbrennstoffen, wie Schweröl, Steinkohle oder Petrolkoks und Sekundärbrennstoffen, wie Altreifen, Altöle, Kunststoffabfälle oder biogene Brennstoffe, wie Sonnenblumenkernschalen, Papierfaserreststoffe und Tiermehl auf 1950°C Guttemperatur beheizt und mit 100 Tonnen/h Rohmehl über den Zyklon-Wärmetauscher 12 und den Kalzinator 9 beschickt. Im Gegenstrom wird das Rohmaterial durch den Abgasstrom aus dem Drehrohrofen 1 aufgeheizt. Im Kalzinator 9 erfolgt eine weitere Aufgabe von Primär- und Sekundärbrennstoffen. Der entstehende Klinker verlässt den Drehrohrofen 1 mit 1200°C und wird im Klinkerkühler 3 zum Vorerwärmen der Luft (Sekundärluft, Tertiärluft) verwendet. Die Tertiärluft wird direkt am Drehrohrofen 1 vorbei in den Kalzinator 9 geleitet und trägt dort zur besseren Verbrennung der aufgegebenen Brennstoffe bei.

Unmittelbar vor der untersten Zyklonstufe des Zyklon-Wärmetauschers 12 wird durch Eindüsung von wässriger Ammoniak-Lösung eine selektive nicht-katalytische Reduktion der Stickoxide in dem Abgas durchgeführt. Letzteres nimmt während des Weges durch die einzelnen Stufen des Wärmetauschers 12 noch flüchtige organische Schadstoffe und geruchsaktive Substanzen aus dem Rohmehl und den Sekundärbrennstoffen auf.

Das aus dem Wärmetauscher 12 austretende Abgas weist folgende Zusammensetzung auf:
25 Vol.-% Kohlendioxid
0,5 Vol.-% Kohlenmonoxid
3 Vol.-% Sauerstoff
400 mg/Nm³ Stickoxide
20 ppm Ammoniak
100 mg/Nm³ organischer Kohlenstoff.

Dieses Abgas wird zur Mahltrocknung in der Einrichtung 15 mit nachgeschalteter Grobausscheidung im Zyklon 17 und gegebenenfalls für andere Trocknungsaggregate, beispielsweise zum Trocknen von Kohle als Primärbrennstoff, verwendet, da durch seinen geringen Sauerstoffgehalt keine Explosionsgefahr besteht. Das für die Trocknungsprozesse nicht benötigte Abgas wird über die Kühleinrichtung 25 geführt und mit Abgas aus dem Zyklon 17 vereinigt und anschließend in dem als Schlauchfilter ausgebildeten Filter 26 vom Staub befreit.

Danach gelangt das Abgas mit einem Volumen von 200000 Nm³/h über die Leitung 23 mit dem das Gebläse 27 in die regenerative thermische Nachverbrennungsanlage 24 mit keramischen Wärmespeicherkörpern 33, 34 in den beiden Regeneratoren 31, 32. Die Wärmespeicherkörper 33 bzw. 34 heizen das Abgas auf eine Temperatur von 950°C auf, bei der in der ersten Zone der Brennkammer 35-1 die Stickoxide mit dem mit der SNCR-Anlage 11 in das Abgas eingebrachten noch vorhandenem überschüssigen Ammoniak und mit einem Teil des Kohlenmonoxids unter Bildung von Stickstoff reduziert werden. Der überschüssige Anteil an Kohlenmonoxid wird mit dem vorhandenen Sauerstoff des Abgases zu Kohlendioxid oxidiert und trägt zur autothermen Betriebsweise der Nachverbrennungsanlage 24 bei. Auch die flüchtigen organischen Schadstoffe und die geruchsaktiven Substanzen in dem Abgas verbrennen in der Brennkammer 35 zu Kohlendioxid und Wasserdampf.

Das Abgas weist nach Verlassen der ersten Zone 35-1 der Brennkammer 35 folgende Zusammensetzung auf:
12 Vol.-% Kohlendioxid
0 Vol.-% Kohlenmonoxid
11 Vol.-% Sauerstoff
300 mg/Nm³ Stickoxide
5 ppm Ammoniak
0 mg/Nm³ organischer Kohlenstoff.

Am Beginn der zweiten Zone 35-2 der Brennkammer 35 werden in Strömungsrichtung 47 130 kg/h 25%ige Ammoniaklösung in Wasser eingedüst, um weitere Anteile an noch vorhandenen Stickoxiden zu reduzieren. Am Ende der zweiten Zone 35-2 der Brennkammer 35 werden in Strömungsrichtung 47 weitere 80 kg/h 25%-ige Ammoniaklösung in Wasser eingedüst, um noch zusätzliche Anteile an vorhandenen Stickoxiden zu reduzieren.

Am Ende der dritten Zone 35-3 der Brennkammer 35 weist das gereingte Abgas folgende Zusammensetzung auf:
12 Vol.-% Kohlendioxid
0 Vol.-% Kohlenmonoxid
11 Vol.-% Sauerstoff
150 mg/Nm³ Stickoxide
5 ppm Ammoniak
0 mg/Nm³ organischer Kohlenstoff.

Bei umgekehrter Strömungsrichtung gemäß dem Pfeil 48 wird die Dosierung der eingedüsten Ammoniaklösung umgekehrt. Dabei wird die Strömungsrichtung etwa alle zwei bis drei Minuten umgekehrt. Das Reingas verlässt die Nachverbrennungsanlage 24 mit einer Temperatur von im Mittel 160°C.

## Patentansprüche

1. Verfahren zur Reinigung von Abgas, das Kohlenstoffverbindungen und Stickoxide enthält, in einer regenerativen thermischen Nachverbrennungsanlage, die mindestens zwei mit Wärmespeicherkörpern (33, 34) gefüllte, durch eine Brennkammer (35) verbundene Regeneratoren (31, 32) aufweist, wobei das Abgas wechselweise in wenigstens einem der Regeneratoren (31, 32) erwärmt wird, in der Brennkammer (35) die Kohlenstoffverbindungen bei einer Temperatur von mehr als 850°C oxidiert werden und das gebildete heiße Reingas durch wenigstens einen der weiteren Regeneratoren (32, 31) abgezogen wird, wobei neben der Oxidation der Kohlenstoffverbindungen eine simultane Reduktion der Stickoxide in der Brennkammer (35) durchgeführt wird, wobei zur Reduktion der Stickoxide in der Brennkammer (35) eine Stickstoffwasserstoffverbindung verwendet wird, wobei die Brennkammer (35) eine erste Zone (35-1) über den Wärmespeicherkörpern (33, 34) des wenigstens einen Regenerators (31, 32), in der das Abgas vorreagiert, eine zweite Zone (35-2) zwischen den wenigstens zwei Regeneratoren (31, 32) und eine dritte Zone (35-3) über den Warmespeicherkörpern (34, 33) des wenigstens einen weiteren Regenerators (32, 31), über den das Reingas abgezogen wird, aufweist und die Stickstoffwasserstoffverbindung am Beginn der zweiten Zone (35-2) und am Ende der zweiten Zone (35-2) zugeführt wird, wobei die Menge der Stickstoffwasserstoffverbindung, die am Beginn der zweiten Zone (35-2) zugeführt wird, größer ist als die Menge der Stickstoffwasserstoffverbindung, die am Ende der zweiten Zone (35-2) zugeführt wird.

2. Verfahren nach Anspruch 1, **dadurch gekennzeichnet, dass** zumindest ein Teil der Stickstoffwasserstoffverbindung zur Reduktion der Stickoxide der regenerativen thermischen Nachverbrennungsanlage bereits mit dem Abgas zugeführt wird.

3. Verfahren nach Anspruch 1 oder 2, **dadurch gekennzeichnet, dass** als Stickstoffwasserstoffverbindung Ammoniak, Carbaminsäure oder Harnstoff verwendet werden.

4. Verfahren nach einem der Ansprüche 1 bis 3, **dadurch gekennzeichnet, dass** die mit dem Abgas zugeführte Stickstoffwasserstoffverbindung und/oder mit dem Abgas zugeführtes Kohlenmonoxid in der ersten Zone (35-1) der Brennkammer (35) einen Teil der Stickoxide reduziert.

5. Verfahren nach Anspruch 1, **dadurch gekennzeichnet, dass** die der Brennkammer (35) am Beginn der zweiten Zone (35-2) zugeführte Stickstoffwasserstoffverbindung die Stickoxide in der zweiten Zone (35-2) reduziert.

6. Verfahren nach einem der vorstehenden Ansprüche,
**dadurch gekennzeichnet, dass** die Verweilzeit des Abgases in der ersten Zone (35-1) und in der dritten Zone (35-3) der Brennkammer (35) jeweils 0,3 bis 1 Sekunde beträgt.

7. Verfahren nach einem der vorstehenden Ansprüche,
**dadurch gekennzeichnet, dass** die Verweilzeit des Abgases in der zweiten Zone (35-2) der Brennkammer (35) 0,5 bis 2 Sekunden beträgt.

8. Verfahren nach einem der vorstehenden Ansprüche,
**dadurch gekennzeichnet, dass** die regenerative thermische Nachverbrennungsanlage eine durch Einschnürungen (37a, 37b) mehrfach geteilte Brennkammer (35) mit den Zonen (35-1, 35-2 und 35-3) aufweist.

9. Verfahren nach einem der vorstehenden Ansprüche 1-7,
**dadurch gekennzeichnet, dass** anstelle von zwei Regeneratoren (31, 32)ein Vielfaches an parallelen Eintritts- und Austrittsregeneratoren vorhanden ist.

10. Verfahren nach einem der vorstehenden Ansprüche 1-7,
**dadurch gekennzeichnet, dass** ein weiterer Regenerator zur Freispülung des Rohgases vorhanden ist.

11. Verfahren nach einem der Ansprüche 1 bis 7, **dadurch gekennzeichnet, dass** am Beginn der zweiten Zone (35-2) und/oder am Ende der zweiten Zone (35-2) der Brennkammer (35) zur Verteilung der als wässrige Lösung zugeführten Stickstoffwasserstoffverbindung wenigstens eine Zweistoffdüse oder wenigstens ein Ultraschallzerstäuber mit jeweils konstantem oder pulsierendem Pumpenvordruck vorgesehen ist.

12. Verfahren nach einem der vorstehenden Ansprüche zur Reinigung der bei der Zementklinkerherstellung in einem Zementwerk anfallenden Abgase.

13. Verfahren nach Anspruch 12, **dadurch gekennzeichnet, dass** zur Zementklinkerherstellung Sekundärbrennstoff verwendet wird, sodass das Abgas einen ausreichenden Kohlenmonoxidgehalt zum autothermen Betrieb der regenerativen thermischen Nachverbrennungsanlage (24) aufweist.

14. Verfahren nach Anspruch 12 oder 13, **dadurch gekennzeichnet, dass** das Rohmehl, bevor es durch Primärfeuerung (2) im Drehrohrofen (1) des Zementwerks gebrannt wird, durch eine Sekundärfeuerung (6) kalziniert wird.

15. Verfahren nach einem der Ansprüche 12 bis 14, **dadurch gekennzeichnet, dass** die hauptsächlich durch die Primärfeuerung (2) des Drehrohrofens (1) gebildeten Stickoxide in dem Abgas unter Zufuhr einer Stickstoffwasserstoffverbindung durch selektive nichtkatalytische Reduktion teilweise abgebaut werden, bevor das Abgas einem Wärmetauscher (12) zur Vorerwärmung des Rohmehls zugeführt wird.

16. Verfahren nach Anspruch 15, **dadurch gekennzeichnet, dass** die Stickstoffwasserstoffverbindung in einem überstöchiometrischen Verhältnis zur Reduktion der Stickoxide in dem Abgas zugeführt wird.

17. Verfahren nach Anspruch 15, **dadurch gekennzeichnet, dass** das aus dem Wärmetauscher (12) austretende Abgas zur Mahltrocknung der Rohstoffe für das Rohmehl verwendet wird.

18. Verfahren nach einem der Ansprüche 12 bis 16, **dadurch gekennzeichnet, dass** in Strömungsrichtung des Abgases nach der Primärfeuerung (2) für den Drehrohrofen (1) die Sekundärfeuerung (6) vorgesehen ist, an die sich ein Kalzinator (9), gefolgt von dem Wärmetauscher (12) zur Vorerwärmung des Rohmehls anschließt.

19. Verfahren nach Anspruch 18, **dadurch gekennzeichnet, dass** für die Sekundärfeuerung (7) eine separate Luftzufuhrleitung (8) vorgesehen ist.

## Claims

1. Process for the purification of waste gas containing carbon compounds and nitrogen oxides in a regenerative thermal post-combustion system having at least two regenerators (31, 32) filled with heat-accumulator bodies (33, 34) and connected by means of a combustion chamber (35), wherein the waste gas is alternately heated in at least one of the regenerators (31, 32), the carbon compounds are oxidized in the combustion chamber (35) at a temperature of more than 850 °C, and the hot clean gas formed is drawn off through at least one of the further regenerators (32, 31), wherein a simultaneous reduction of the nitrogen oxides is carried out in the combustion chamber (35) in addition to the oxidation of the carbon compounds, wherein a nitrogen-hydrogen compound is used for the reduction of the nitrogen oxides in the combustion chamber (35), wherein the combustion chamber (35) has a first zone (35-1) above the heat-accumulator bodies (33, 34) of the at least one regenerator (31, 32) in which the waste gas pre-reacts, a second zone (35-2) between the at least two regenerators (31, 32), and a third zone (35-3) above the heat-accumulator bodies (34, 33) of the at least one further regenerator (32, 31) through which the clean gas is drawn off, and the nitrogen-hydrogen compound is supplied at the beginning of the second zone (35-2) and at the end of the second zone (35-2), wherein the amount of the nitrogen-hydrogen compound which is supplied at the beginning of the second zone (35-2) is larger than the amount of the nitrogen-hydrogen compound which is supplied at the end of the second zone (35-2).

2. Process according to claim 1, **characterized in that** at least part of the nitrogen-hydrogen compound for the reduction of the nitrogen oxides of the regenerative thermal post-combustion system is supplied already with the waste gas.

3. Process according to claim 1 or 2, **characterized in that** ammonia, carbamic acid or urea are used as a nitrogen-hydrogen compound.

4. Process according to any of claims 1 to 3, **characterized in that** the nitrogen-hydrogen compound supplied with the waste gas and/or the carbon monoxide supplied with the waste gas reduces part of the nitrogen oxides in the first zone (35-1) of the combustion chamber (35).

5. Process according to claim 1, **characterized in that** the nitrogen-hydrogen compound supplied to the combustion chamber (35) at the beginning of the second zone (35-2) reduces the nitrogen oxides in the second zone (35-2).

6. Process according to any of the preceding claims, **characterized in that** the residence time of the waste gas in the first zone (35-1) and in the third zone (35-3) of the combustion chamber (35) is 0.3 to 1 second in each case.

7. Process according to any of the preceding claims, **characterized in that** the residence time of the waste gas in the second zone (35-2) of the combustion chamber (35) is 0.5 to 2 seconds.

8. Process according to any of the preceding claims, **characterized in that** the regenerative thermal post-combustion system has a combustion chamber (35) with the zones (35-1, 35-2 and 35-3) which is multi-partitioned by means of contractions (37a, 37b).

9. Process according to any of the preceding claims 1 to 7, **characterized in that** a plurality of parallel inlet and outlet regenerators is provided instead of two regenerators (31, 32).

10. Process according to any of the preceding claims 1 to 7, **characterized in that** a further regenerator for purging the raw gas is provided.

11. Process according to any of claims 1 to 7, **characterized in that**, at the beginning of the second zone (35-2) and/or at the end of the second zone (35-2) of the combustion chamber (35), at least one two-fluid nozzle or at least one ultrasonic atomizer each having a constant or pulsating pump pre-pressure is provided for the distribution of the nitrogen-hydrogen compound supplied as an aqueous solution.

12. Process according to any of the preceding claims for the purification of the waste gases resulting from the production of cement clinker in a cement plant.

13. Process according to claim 12, **characterized in that** a secondary fuel is used for the production of cement clinker so that the waste gas has a sufficient content of carbon monoxide for the autothermal operation of the regenerative post-combustion system (24).

14. Process according to claim 12 to 13, **characterized in that** the raw meal is calcined by means of a secondary combustion (6) before it is combusted in the rotary kiln (1) of the cement plant by means of primary combustion (2).

15. Process according to any of claims 12 to 14, **characterized in that** the nitrogen oxides in the waste gas mainly formed by means of the primary combustion (2) of the rotary kiln (1) are partly degraded by selective non-catalytic reduction by adding a nitrogen-hydrogen compound before the waste gas is supplied to a heat exchanger (12) for preheating the raw meal.

16. Process according to claim 15, **characterized in that** the nitrogen-hydrogen compound is supplied in a hyperstoichiometric ratio for reducing the nitrogen oxides in the waste gas.

17. Process according to claim 15, **characterized in that** the waste gas emerging from the heat exchanger (12) is used for pulverizing and drying the raw materials for the raw meal.

18. Process according to any of claims 12 to 16, **characterized in that**, in the direction of the waste gas flow after the primary combustion (2) for the rotary kiln (1), the secondary combustion (6) is provided, which is a adjoined by a calciner (9) followed by the heat exchanger (12) for preheating the raw meal.

19. Process according to claim 18, **characterized in that** a separate air-supply line (8) is provided for the secondary combustion (7).

## Revendications

1. Procédé d'épuration de gaz d'échappement qui contient des composés de carbone et des oxydes d'azote, dans une installation de postcombustion thermique régénérative qui présente au moins deux régénérateurs (31, 32) remplis de corps d'accumulation de chaleur (3) et reliés par une chambre de combustion (35), le gaz d'échappement étant chauffé en alternance dans au moins un des régénérateurs (31, 32), les composés de carbone étant oxydés dans la chambre de combustion (35) à une température de plus de 850°C et le gaz pur chaud formé étant retiré à travers au moins un des autres régénérateurs (32, 31), et en plus de l'oxydation des composés de carbone, une réduction simultanée des oxydes d'azote étant effectuée dans la chambre de combustion (35), un composé d'azote et hydrogène étant utilisé pour la réduction des oxydes d'azote dans la chambre de combustion (35), la chambre de combustion (35) présentant une première zone (35-1) au-dessus des corps d'accumulation de chaleur (33, 34) dudit au moins un régénérateur (31, 32), dans laquelle le gaz d'échappement réagit préalablement, une deuxième zone (35-2) entre lesdits au moins deux régénérateurs (31, 32), et une troisième zone (35-3) au-dessus des corps d'accumulation de chaleur (34, 33) dudit au moins un autre régénérateur (32, 31) à travers lequel le gaz pur est retiré, et le composé d'azote et d'hydrogène étant amené au début de la deuxième zone (35-2) et à la fin de la deuxième zone (35-2), la quantité du composé d'azote et d'hydrogène qui est amené au début de la deuxième zone (35-2) étant plus grande que la quantité du composé d'azote hydrogène qui est amené à la fin de la deuxième zone (35-2).

2. Procédé selon la revendication 1, **caractérisé en ce qu'**au moins une partie du composé d'azote et d'hydrogène pour la réduction des oxydes d'azote de l'installation de postcombustion thermique régénérative est déjà amenée avec le gaz d'échappement.

3. Procédé selon la revendication 1 ou 2, **caractérisé en ce qu'**on utilise en tant que composé d'azote et d'hydrogène de l'ammoniac, de l'acide carbamique ou de l'urée.

4. Procédé selon l'une des revendications 1 à 3, **caractérisé en ce que** le composé d'azote et d'hydrogène amené avec le gaz d'échappement et/ou le monoxyde de carbone amené avec le gaz d'échappement réduit une partie des oxydes d'azote dans la première zone (35-1) de la chambre de combustion (35).

5. Procédé selon la revendication 1, **caractérisé en ce que** le composé d'azote et d'hydrogène amené à la chambre de combustion (35) au début de la deuxième zone (35-2) réduit les oxydes d'azote dans la deuxième zone (35-2).

6. Procédé selon l'une des revendications précédentes, **caractérisé en ce que** le temps de séjour du gaz d'échappement dans la première zone (35-1) et dans la troisième zone (35-3) de la chambre de combustion (35) est respectivement de 0,3 à 1 seconde.

7. Procédé selon l'une des revendications précédentes, **caractérisé en ce que** le temps de séjour du gaz d'échappement dans la deuxième zone (35-2) de la chambre de combustion (35) est de 0,5 à 2 secondes.

8. Procédé selon l'une des revendications précédentes, **caractérisé en ce que** l'installation de postcombustion thermique régénérative présente une chambre de combustion (35) avec les zones (35-1, 35-2 et 35-3), divisée plusieurs fois par des étranglements (37a, 37b).

9. Procédé selon l'une des revendications précédentes 1 à 7, **caractérisé en ce qu'**à la place de deux régénérateurs (31, 32), il existe un multiple de régénérateurs d'entrée et de sortie parallèles.

10. Procédé selon l'une des revendications précédentes 1 à 7, **caractérisé en ce qu'**il existe un autre régénérateur pour rincer le gaz brut.

11. Procédé selon l'une des revendications 1 à 7, **caractérisé en ce qu'**au début de la deuxième zone (35-2) et/ou à la fin de la deuxième zone (35-2) de la chambre de combustion (35), il est prévu, pour la répartition du composé d'azote et d'hydrogène amené sous forme de solution aqueuse, au moins une buse à deux substances ou au moins un pulvérisateur aux ultrasons avec une pression d'admission de pompe constante ou par pulsations, respectivement.

12. Procédé selon l'une des revendications précédentes pour l'épuration des gaz d'échappement produits lors de la fabrication de clinker de ciment dans une cimenterie.

13. Procédé selon la revendication 12, **caractérisé en ce qu'**un combustible secondaire est utilisé pour la fabrication de clinker de ciment, de telle sorte que le gaz d'échappement présente une teneur en monoxyde de carbone suffisante pour le fonctionnement autotherme de l'installation de postcombustion (24) thermique régénérative.

14. Procédé selon la revendication 12 ou 13, **caractérisé en ce que** la farine crue est calcinée par une cuisson secondaire (6) avant d'être cuite par cuisson primaire (2) dans le four tubulaire rotatif (1) de la cimenterie.

15. Procédé selon l'une des revendications 12 à 14, **caractérisé en ce que** les oxydes d'azote formés principalement par la cuisson primaire (2) du four tubulaire rotatif (1) sont partiellement décomposés dans le gaz d'échappement par réduction non catalytique sélective en amenant un composé d'azote et d'hydrogène avant que le gaz d'échappement soit amené à un échangeur de chaleur (12) pour préchauffer la farine crue.

16. Procédé selon la revendication 15, **caractérisé en ce que** le composé d'azote et d'hydrogène est amené dans un rapport sur-stoechiométrique pour la réduction des oxydes d'azote dans le gaz d'échappement.

17. Procédé selon la revendication 15, **caractérisé en ce que** le gaz d'échappement sortant de l'échangeur de chaleur (12) pour le broyage à sec des matières premières est utilisé pour la farine crue.

18. Procédé selon l'une des revendications 12 à 16, **caractérisé en ce qu'**en direction de flux du gaz d'échappement, la cuisson secondaire (6) est prévue après la cuisson primaire (2) pour le four tubulaire rotatif (1), et à celle-ci se raccorde un calcinateur (9) qui est suivi par l'échangeur de chaleur (12) pour préchauffer la farine crue.

19. Procédé selon la revendication 18, **caractérisé en ce qu'**une conduite d'amenée d'air (8) séparée est prévue pour la cuisson secondaire (7).
